# EUROPEAN PATENT SPECIFICATION

(11) **EP 1 958 374 B1**
(45) Date of publication and mention of the grant of the patent: **25.03.2009**
(21) Application number: 06831950.8
(22) Date of filing: 27.11.2006
(51) Int. Cl.: H04L 9/32

(54) **PROOFS OF VICINITY USING CPUFS**
BEWEISE DER PHYSISCHEN NÄHE UNTER VERWENDUNG VON CPUFS
PREUVES DE PROXIMITE FAISANT APPEL A DES FONCTIONS PHYSIQUES NON CLONABLES CONTROLEES (CPUF)

(30) Priority: 29.11.2005 EP 05111423
(43) Date of publication of application: 20.08.2008
(73) Proprietor: Koninklijke Philips Electronics N.V., 5621 BA Eindhoven (NL)
(72) Inventor: SKORIC, Boris, NL-5656 AA Eindhoven (NL); BRUEKERS, Alphons, A., M., L., NL-5656 AA Eindhoven (NL); TUYLS, Pim, T., NL-5656 AA Eindhoven (NL); OPHEY, Willem, G., NL-5656 AA Eindhoven (NL)
(74) Representative: Van Velzen, Maaike Mathilde
(86) International application number: PCT/IB2006/054451
(87) International publication number: WO 2007/063475

(56) References cited:
- WO-A-03/090259
- GASSEND B ET AL: "Controlled physical random functions" COMPUTER SECURITY APPLICATIONS CONFERENCE, 2002. PROCEEDINGS. 18TH ANNUAL 9-13 DEC. 2002, PISCATAWAY, NJ, USA,IEEE, 9 December 2002 (2002-12-09), pages 149-160, XP010627027 ISBN: 0-7695-1828-1

## Description

The present invention relates to a method and a device for authenticating a plurality of physical tokens.

*A Physical Uncloneable Function (PUF)* is a structure used for creating a tamper-resistant environment in which parties may establish a shared secret. A PUF is a physical token to which an input - a *challenge -* is provided. When the challenge is provided to the PUF, it produces a random analog output referred to as a *response.* Because of its complexity and the physical laws it complies with, the token is considered to be 'uncloneable', i.e. unfeasible to physically replicate and/or computationally model. A PUF is sometimes also referred to as a *Physical Random Function*. A PUF can be substantially strengthened if it is combined with a control function. In practice, the PUF and an algorithm that is inseparable from the PUF is comprised within a tamper-resistant chip. The PUF can only be accessed via the algorithm and any attempt to by-pass or manipulate the algorithm will destroy the PUF. The algorithm, which is implemented in hardware, software or a combination thereof, governs the input and output of the PUF. For instance, frequent challenging of the PUF is prohibited, certain classes of challenges are prohibited, the physical output of the PUF is hidden, only cryptographically protected data is revealed, etc. Such measures substantially strengthen the security, since an attacker cannot challenge the PUF at will and cannot interpret the responses. This type of PUF is referred to as a controlled PUF (CPUF).

An example of a PUF is a 3D optical medium containing light scatterers at random positions. The input - i.e. the challenge - can be e.g. angle of incidence of a laser beam that illuminates the PUF, and the output - i.e. the response - is a speckle pattern.

In an *enrollment phase*, a challenge is provided to the PUF, which produces a unique and unpredictable response to the challenge. The challenge and the corresponding response may be stored at a verifier with whom authentication subsequently is to be undertaken. If enrollment data are encrypted, hashed or in any other appropriate manner cryptographically protected, it can in principle be stored anywhere in the world. For instance, it may be stored in connection to the PUP itself. This frees an enroller from the obligation of maintaining a database. Typically, in an *authentication phase*, the verifier provides a proving party with the challenge that was stored in the enrollment phase. If the proving party is able to return a response to the challenge, which response matches the response that was stored in the enrollment phase, the proving party is considered to have proven access to a shared secret, and is thus authenticated by the verifier. Both the enrollment phase and the authentication phase should be undertaken without revealing the shared secret, i.e. the response, which typically involves setting up secure channels by means of encryption.

PUFs are e.g. employed by users to authenticate themselves and thus get access to certain data, services or devices. Devices in which the PUFs are implemented for this purpose may for example comprise smartcards communicating by means of radio frequency signals or via a wired interface (such as USB) with the device to be accessed.

The above-mentioned prior art is disclosed in the document WO 03/090259 A. In detail, the said document discloses a method of authenticating a physical token, comprising the step of supplying a device, the device comprising the said physical token, with a challenge of the respective physical token created during enrollment of said respective physical token, wherein the challenge supplied to the device is cryptographically processed with the response of the token comprised in the device.

In certain types of mathematical secret sharing schemes known in the art, different sets of information are given to a number (N) of people. Much like fitting pieces together in a jigsaw puzzle, these information sets are combined such that they reveal a secret. In general, if fewer than N people combine their information sets, they learn nothing about the secret, even though variations exist where it is sufficient to combine k pieces (k < N). An essential feature in existing secret sharing schemes is that a proof is provided that a certain number of different information sets have been combined. This can serve as a proof that a sufficient number of authorized participants have agreed to something, e.g. opening a safe. An example of a prior art secret sharing scheme uses polynomials. The secret comprises a y-axis coordinate in a 2D plane, namely the coordinate where a secret polynomial of degree k-1 intersects the y-axis. Every participant receives a different polynomial coordinate. If k people combine their data, they can reconstruct the polynomial and compute the coordinate where the secret polynomial intersects the y-axis.

In some situations, it is desirable to prove not only that information sets have been combined, but that physical carriers of the information sets actually are (or have been) located in the same place. Such a 'physical' proof could e.g. prove that a group of people have been present together in the same room at the same time.

An object of the present invention is to solve the problems mentioned in the above and to enable a group of people or devices to provide a physical proof that they actually have been physically gathered.

This object is attained by a method of authenticating a plurality of physical tokens in accordance with claim 1 and a device for authenticating a plurality of physical tokens in accordance with claim 11.

In a first aspect of the invention, there is provided a method comprising the step of supplying a sequence of interconnected devices, each device comprising a physical token, with a challenge of the respective physical token created during enrollment of the respective physical token, wherein the sequence of interconnected devices is arranged such that a data set supplied to the sequence is cryptographically processed with a response of a token comprised in a device and passed on to a token comprised in a subsequent device which further cryptographically processes the processed data set with its response until a response of a final physical token has been used to further cryptographically process the data set. Further, the method comprises the step of receiving the data set which has been cryptographically processed with the responses of the tokens in the sequence and using the cryptographically processed data set, the data set itself and data associated with the response of the respective token to authenticate the sequence of physical tokens.

In a second aspect of the invention, there is provided a device comprising means for supplying a sequence of interconnected devices, each device comprising a physical token, with a challenge of the respective physical token created during enrollment of the respective physical token, wherein the sequence of interconnected devices is arranged such that a data set supplied to the sequence is cryptographically processed with a response of a token comprised in a device and passed on to a token comprised in a subsequent device which further cryptographically processes the processed data set with its response until a response of a final physical token has been used to further cryptographically process the data set. Further, the device comprises means for receiving the data set which has been cryptographically processed with the responses of the tokens in the sequence and means for using the cryptographically processed data set, the data set itself and data associated with the response of the respective token to authenticate the sequence of physical tokens.

A basic idea of the invention is to authenticate a plurality of devices by interconnecting the devices, each device comprising a physical token such as a physical uncloneable function (PUF), in a sequence and provide the sequence with a challenge of the respective PUF and further a data set to be cryptographically processed by each PUF. The data set is typically a message or a random number. The challenge has been created during enrollment of each PUF, prior to authentication. The challenges can either be provided to a first PUF in the sequence, which passes the challenges on, or each PUF can be provided with the respective challenge. The sequence of interconnected devices is arranged such that the data set (in the following referred to as "the message") supplied to the sequence is cryptographically processed with a response of a token comprised in a device that is located first in the sequence, and is passed on to a token comprised in a subsequent device. The token comprised in the subsequent device produces a response to the challenge provided to it, and uses this response to further process the already processed message. The processing of the message with a response of a token continues until a response of a final physical token has been used to further cryptographically process the message.

A verifier, which supplied the sequence of devices with the message in the first place, receives from the final device the message which has been cryptographically processed with the responses of the tokens in the sequence. The received cryptographically processed message, a plain text copy of the message and data associated with the response of the respective token is then used by the verifier to authenticate the sequence of physical tokens. Hence, a "proof" of PUF interconnection is supplied to the verifier. The present invention advantageously utilizes the uncloneability property of PUFs, which ensures that the characteristic of a PUF is unfeasible to replicate.

In embodiments of the present invention, the data associated with the response of the respective token is actually the response itself of the respective token. In that case, at least two approaches can be provided to perform authentication of the PUFs.

In the first approach, after each token has used its response to encrypt the message, the verifier uses the response of the respective token to decrypt the encrypted message and thus attain a clear text copy of the message. This message is compared to the message that was provided to the sequence of PUFs. If there is correspondence between the two, the PUFs comprised in the sequence are authenticated.

In the second approach, the verifier uses the response of the respective token to encrypt the message that was provided to the sequence. The encrypted message is compared to the encrypted message that was received from the final PUF of the sequence. If there is correspondence between the two encrypted messages, the PUFs comprised in the sequence are authenticated.

The challenge and the corresponding response of each PUF may be stored at the verifier with whom authentication subsequently is to be undertaken. However, if enrollment data are encrypted, hashed or in any other appropriate manner cryptographically protected, it can virtually be stored anywhere. For instance, it may be stored in connection to the PUF itself. This frees an enroller/verifier from the obligation of maintaining a database of challenge-response pairs (CRPs). A response of a PUF is information which in general should not be made publicly available, since an eavesdropper having access to a response may be able to deceive a verifier.

Further, the party performing the actual enrollment (i.e. the enroller) is not necessarily the same as the party who subsequently performs verification (i.e. the verifier). For instance, a bank may centrally enroll a user, while verification of the user typically is undertaken at a local bank office. Furthermore, the challenge and the response are not necessarily stored together, but may be separated and stored in different physical locations. Alternatively, the response is not stored at all. In practice, a plurality of CRPs are created in the enrollment phase for each PUF, and at least the challenge of the CRP is stored, such that the CRP can be re-created. As is understood by a skilled person, if the enrolling party and the verifying party are not the same, it may for security reasons be necessary to provide a CRP with a signature of the enroller, such that the verifier is ensured that the CRP has been created by means of a trusted enroller. The signature of the enroller is further necessary when a CRP is physically stored where the enroller cannot control it, such as in vicinity of any one of the PUFs in an enrolled sequence. In cases where the enrollment data is kept in a secure location, no signature is necessary.

Note that the users are not necessarily informed about the order of concatenation of the PUFs when authentication is to be undertaken. In case they are not given the concatenation order, the order in itself becomes a secret which can be considered to strengthen security in a system; if the users do not know the order in which the verifier is going to encrypt/decrypt the message, it will in practice be unfeasible to guess the order when a larger number of PUFs are concatenated.

In other embodiments of the present invention, the response of the respective token is used as a private key, and the data associated with the response of the respective token is a public key that corresponds to the private key.

In that case, after each token has used its response (i.e. its private key) to digitally sign the message, the verifier uses the corresponding public key to verify the digitally signed message received from the final PUF of the sequence. Preferably, the verifier receives a digitally signed message from each physical token after the respective token has performed its signing and verifies, by means of the public key corresponding to the private key of the respective physical token, the digitally signed message received from each token. Further, each verified message is compared with the message provided as a challenge to the token, wherein the physical tokens comprised in the sequence are authenticated if there is correspondence between the verified message and the message provided as a challenge. Further features of, and advantages with, the present invention will become apparent when studying the appended claims and the following description. Those skilled in the art realize that different features of the present invention can be combined to create embodiments other than those described in the following.

A detailed description of preferred embodiments of the present invention will be given in the following with reference made to the accompanying drawings, in which:
Fig. 1 shows authentication of a plurality of PUFs at a verifying party in accordance with an embodiment of the present invention.
Fig. 2 shows authentication of a plurality of PUFs at a verifying party in accordance with another embodiment of the present invention.

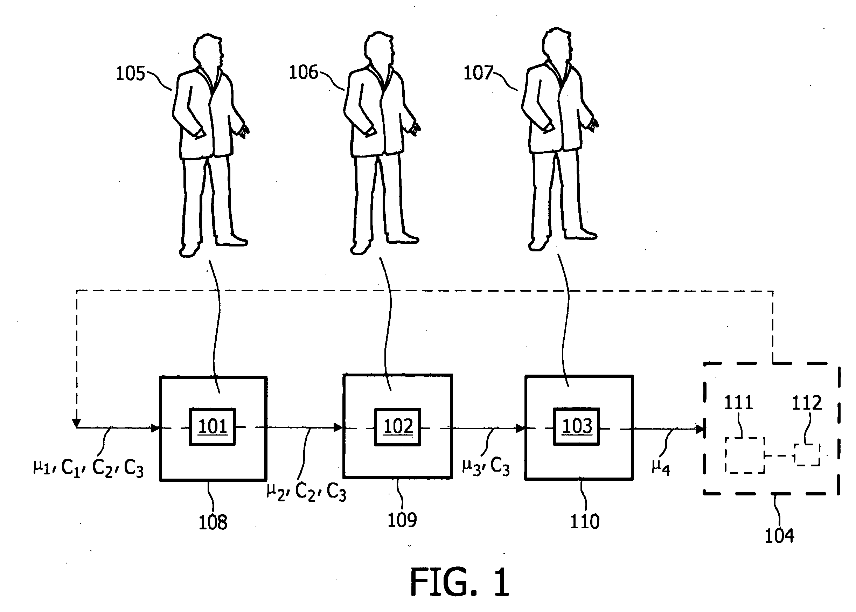

In Fig. 1, an embodiment of performing authentication of a plurality of enrolled PUFs 101, 102, 103 in accordance with an embodiment of the present invention is shown. It is assumed that the PUFs have been enrolled before authentication is to be undertaken. Hence, at an enroller, each PUF has been provided with a challenge and produced a response corresponding to the challenge, i.e. each PUF may be enrolled separately. A challenge-response pair (CRP) has thus been created for each PUF. The CRP is stored such that authentication subsequently can be performed. Further, each PUF is associated with a respective user 105, 106, 107. The embodiment illustrated in Fig. 1 provides an efficient method of challenging a plurality of PUPs and checking whether the response of each PUF is correct. The first PUF 101 receives challenges *C1, C2, C3* intended for the PUFs, and a message in the form of a random number µ₁, from a verifier 104 at which the PUFs are to be authenticated. The verifier is not necessarily the same as the enroller. The PUF 101 produces a response *R*' to the first challenge *C1*. Then, a CPUF 108 in which the PUF is comprised encrypts the random number µ₁ by means of this response. The encrypted data µ₂ = E_{R'}(µ₁) is passed on to the second PUF 102 together with the remaining challenges *C2, C3.*

As previously mentioned, a PUF can be substantially strengthened if it is combined with a control function. In practice, the PUF and an algorithm that is inseparable from the PUF is comprised within a tamper-resistant chip. The PUF can only be accessed via the algorithm and any attempt to by-pass or manipulate the algorithm will destroy the PUF. The algorithm, which is implemented in hardware, software or a combination thereof, governs the input and output of the PUF. This type of PUF is referred to as a controlled PUF (CPUF). In general, the chip comprises computing means (not shown) for executing the algorithm and storing means (not shown) for storing software to be run on the microprocessor. The computing means, which may be embodied in the form of a microprocessor, is arranged such that it can perform cryptographic operations such as encryption, decryption, digital signing, hashing, etc. The verifier 104 also comprises a microprocessor 111 and a memory 112 for executing and storing appropriate software.

The PUF used may e.g. be a 3D optical medium containing light scatterers at random positions. The input (i.e. the challenge) to the PUF can for instance be a laser beam originating from a laser diode comprised in the chip, and the output (i.e. the response) is a speckle pattern detected by light detecting elements arranged in the chip. The chip is arranged with an input via which a challenge may be supplied and an output via which a response may be provided. The challenge is typically provided to a CPUF in the form of digital data which is converted in the CPUF into operating parameters of the laser diode, e.g. luminance, such that an appropriate challenge is supplied to the PUF. When the resulting speckle pattern, i.e. the response, is detected, it is converted into digital data which can exit the CPUF via its output. Hence, each of the PUFs 101, 102, 103 are implemented in a CPUF 108, 109, 110, respectively.

Note that a data set other than the random number may be used, e.g. any one of the supplied challenges. In that case, there is no need to supply the sequence with a random number. The CPUF 108 could then encrypt the first challenge *C₁* with the corresponding response, i.e. µ₂ = E_{R'}(*C₁*) and pass µ₂ on in the sequence.

The second PUF 102 produces a response *R''* from the challenge *C2* and CPUF 109 uses this response to encrypt µ₂, and a further set of encrypted data µ₃ = E_{R''}(µ₂) is created and passed on together with the remaining challenge *C3*. Finally, the third PUF 103 responds to the challenge *C3* and a corresponding response *R'''* is employed to create a final set of data µ₄ = E_{R'''}(µ₃) which is supplied to the verifier 304.

Now, since the verifier has access to the CRP of each PUF, it starts with decrypting µ₄ = E_{R'''}(µ₃) using the response *R'''* of the third PUF 103.

Hence, µ₃ = D_{R'''}(µ₄) is computed. Next, µ₃ = E_{R''}(µ₂) is decrypted with the response *R*'' of the second PUF 102, and this chain of decryptions continues until the random number µ₁, which was provided by the verifier 304, is in the clear. Consequently, if the random number µ₁ is obtained by executing the described decryption chain, the response of the respective PUF must have been used when performing the encryption at each PUF. Alternatively, since the verifier 105 knows the responses and the random numbers, it is possible that the verifier encrypts each random number with the respective response until µ₄ = E_{R'''}(µ₃) is attained. Then, the verifier may compare the attained encrypted data set µ₄ = E_{R'''}(µ₃) with the corresponding data set received from the final CPUF 110 to verify correspondence.

If the verifier does not know in advance the order in which the users 105, 106, 107 interconnect their CPUFs 108, 109, 110, this order must be provided to the verifier. Alternatively, the verifier instructs the users in which order they are supposed to concatenate their PUFs.

In another embodiment of the invention, which also is described with reference to Fig. 1, the sequence of PUFs receives challenges *C1, C2, C3* intended for the respective PUF, and a message in the form of a random number µ₁. The first PUF 101 produces a response *R'* to the first challenge *C1*. Then, the CPUF 108 digitally signs the random number µ₁ by means of this response. Hence, the response is used as a private key of the PUF, and a corresponding public key *P*' is known to the verifier 104. The verifier also has access to the challenges, but need not store the corresponding responses. Hence, the verifier 105 does not have access to the private keys of the PUFs. The signed data µ₂ = E_{R'}(µ₁) is passed on to the second PUF 102 together with the remaining challenges *C2*, *C3.* Optionally, the CPUF 108 also sends the signed data µ₂ = E_{R'}(µ₁) to the verifier 104.

The second PUF 102 produces a response *R''* from the challenge *C2* and CPUF 109 uses this response to sign µ₂, and a further set of signed data µ₃ = E_{R''}(µ₂) is thus created and passed on together with the remaining challenge *C3*. Optionally, the CPUF 109 also sends the signed data µ₃ = E_{R''}(µ₂) to the verifier 104.

Finally, the third PUF 103 responds to the challenge *C3* and a corresponding response *R'''* is employed by the CPUF 110 to create a final set of signed data µ₄ = E_{R'''}(µ₃) which is supplied to the verifier 104. The CPUF 109 sends the signed data µ₃ = E_{R''}(µ₂) to the verifier 105. In case µ₂ = E_{R'}(µ₁) and µ₃ = E_{R''}(µ₂) have not been sent from the CPUF 109 and 110, respectively, these signed data sets should be sent to the verifier 105.

Now, since the verifier has access to the public key *P'*, *P''*, *P'''* of each PUF 101, 102, 103, respectively, it starts with decrypting µ₄ = E_{R'''}(µ₃) using the public key *P''* that corresponds to the private key (i.e. the response *R'''*) of the third PUF 103. Hence, the verifier computes µ₃ = D_{P'''}(µ₄). Consequently, the verifier verifies the signature provided by the CPUF 110. Further, the verifier compares µ₃ = D_{P'''}(µ₄) with µ₃ = E_{R''}(µ₂), which was received from either CPUF 109 or 110, to make sure that the correct data has been signed. Next, the verifier 105 verifies the signature provided by CPUF 109 by decrypting µ₃ = E_{R''}(µ₂) with the corresponding public key *P''*, such that µ₂ = D_{P''}(µ₃) is obtained. The signed data µ₂ = D_{P''}(µ₃) is compared with µ₂ = E_{R'}(µ₁) and so on. This decryption chain continues until all signatures down to E_{R'}(µ₁) have been verified.

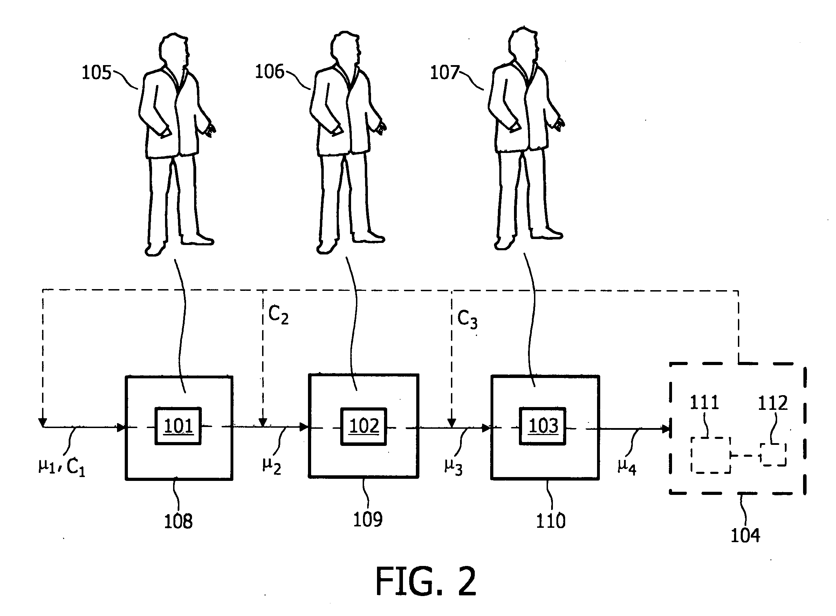

Further, as is shown in Fig. 2, each challenge may be distributed to the respective CPUF immediately, instead of being passed on in the sequence. In that case, only the cryptographically processed random number is passed on to a subsequent CPUF.

In a further embodiment of the invention, a verifier demands that a response of a sequence of PUFs is returned to him within a small time window to prevent that PUF users located remotely from each other can compute responses and distribute them among each other even though they have not concatenated their PUFs.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A method of authenticating a plurality of physical tokens, comprising the steps of:
- supplying a sequence of interconnected devices (108, 109, 110), each device comprising a physical token (101, 102, 103), with a challenge of the respective physical token created during enrollment of said respective physical token, wherein the sequence of interconnected devices is arranged such that a data set supplied to the sequence is cryptographically processed with a response of a token comprised in a device and passed on to a token comprised in a subsequent device which further cryptographically processes the processed data set with its response until a response of a final physical token has been used to further cryptographically process the data set;
- receiving the data set which has been cryptographically processed with the responses of the tokens in the sequence; and
- using the cryptographically processed data set, the data set itself and data associated with the response of the respective token to authenticate the sequence of physical tokens.

2. The method according to claim 1, wherein the data associated with the response of the respective token (101, 102, 103) is the response itself of the respective token.

3. The method according to claim 2, wherein the cryptographical processing of the data set comprises encrypting the data set and the step of using the encrypted data set, the data set itself and the response of the respective token (101, 102, 103) to authenticate the sequence of physical tokens comprises the steps of:
- decrypting, by means of the response of the respective physical token, said encrypted data set; and
- comparing the decrypted data set with a corresponding data set that was supplied to the sequence, wherein the physical tokens comprised in the sequence are authenticated if there is correspondence between the decrypted data set and the data set supplied to the sequence.

4. The method according to claim 2, wherein the cryptographical processing of the data set comprises encrypting the data set and the step of using the encrypted data set, the data set itself and the response of the respective token (101, 102, 103) to authenticate the sequence of physical tokens comprises the steps of:
- encrypting, by means of the response of the respective physical token, said data set supplied to the sequence; and
- comparing the encrypted data set with the encrypted data set received from the final physical token, wherein the physical tokens comprised in the sequence are authenticated if there is correspondence between the two encrypted data sets.

5. The method according to claim 1, wherein the response of the respective token (101, 102, 103) is used as a private key and the data associated with the response of the respective token is a public key corresponding to said private key.

6. The method according to claim 5, wherein the cryptographical processing of the data set comprises digitally signing the data set and the step of using the digitally signed data set, the data set itself and said public key to authenticate the sequence of physical tokens (101, 102, 103) comprises the steps of:
- receiving a digitally signed data set from each physical token after the respective token has performed its signing; and
- verifying, by means of the public key corresponding to the private key of the respective physical token, said digitally signed data set received from each token.

7. The method according to claim 6, further comprising the step of comparing the verified data set received from each physical token (101, 102, 103) with the data provided as a challenge to each token, wherein the physical tokens comprised in the sequence are authenticated if there is correspondence between said verified data set and said data provided as a challenge.

8. The method according to claim 1, further comprising the step of receiving an order in which the devices (108, 109, 110) are interconnected in sequence.

9. The method according to claim 1, further comprising the step of supplying the devices (108, 109, 110) with an order in which they are to be interconnected in sequence.

10. The method according to claim 1, wherein the data set supplied to the sequence comprises a random number.

11. A device (104) for authenticating a plurality of physical tokens, comprising:
- means (111) for supplying a sequence of interconnected devices (108, 109, 110), each device comprising a physical token (101, 102, 103), with a challenge of the respective physical token created during enrollment of said respective physical token, wherein the sequence of interconnected devices is arranged such that a data set supplied to the sequence is cryptographically processed with a response of a token comprised in a device and passed on to a token comprised in a subsequent device which further cryptographically processes the processed data set with its response until a response of a final physical token has been used to further cryptographically process the data set;
- means (111) for receiving the data set which has been cryptographically processed with the responses of the tokens in the sequence; and
- means (111) for using the cryptographically processed data set, the data set itself and data associated with the response of the respective token to authenticate the sequence of physical tokens.

12. A computer program product comprising computer-executable components for causing a device (104) to perform the steps recited in claim 1 when the computer-executable components are run on a processing unit (111) included in the device.

## Patentansprüche

1. Verfahren der Authentisierung einer Vielzahl von physischen Tokens, das folgende Schritte umfasst:
- Liefern einer Folge zusammen geschalteter Einrichtungen (108, 109, 110), wobei jede Einrichtung ein physisches Token (101, 102, 103) umfasst, mit einer während der Registrierung des genannten betreffenden physischen Token geschaffenen Challenge, wobei die Folge zusammen geschalteter Einrichtungen so angeordnet ist, dass ein der Folge zugeführter Datensatz mit einer Response eines in einer Einrichtung enthaltenen Token kryptographisch verarbeitet und zu einem in einer nachfolgenden Einrichtung enthaltenen Token weitergeleitet wird, das den verarbeiteten Datensatz mit seiner Response weiter kryptographisch verarbeitet bis eine Response eines letzten physischen Token dazu verwendet wurde, den Datensatz weiter kryptographisch zu verarbeiten,
- Empfangen des Datensatzes, der kryptographisch mit den Responses der Tokens in der Folge verarbeitet wurde, und
- Verwenden des kryptographisch verarbeiteten Datensatzes, des Datensatzes selbst und der Response des betreffenden Token zugeordneten Daten zur Authentisierung der Folge physischer Tokens.

2. Verfahren nach Anspruch 1, wobei die der Response des betreffenden Token (101, 102, 103) zugeordneten Daten die Response selbst des betreffenden Token ist.

3. Verfahren nach Anspruch 2, wobei die kryptographische Verarbeitung des Datensatzes das Verschlüsseln des Datensatzes umfasst und der Schritt des Verwendens des verschlüsselten Datensatzes, des Datensatzes selbst und der Response des betreffenden Token (101, 102, 103) zur Authentisierung der Folge physischer Tokens folgende Schritte umfasst:
- Entschlüsseln des genannten verschlüsselten Datensatzes mit Hilfe der Response des betreffenden physischen Token und
- Vergleichen des entschlüsselten Datensatzes mit einem entsprechenden Datensatz, der der Folge zugeführt wurde, wobei die in der Folge enthaltenen physischen Tokens authentisiert werden, wenn eine Übereinstimmung zwischen dem entschlüsselten Datensatz und dem der Folge zugeführten Datensatz besteht.

4. Verfahren nach Anspruch 2, wobei die kryptographische Verarbeitung des Datensatzes das Verschlüsseln des Datensatzes umfasst und der Schritt des Verwendens des verschlüsselten Datensatzes, des Datensatzes selbst und der Response des betreffenden Token (101, 102, 103) zur Authentisierung der Folge physischer Tokens folgende Schritte umfasst:
- Verschlüsseln des genannten von der Folge gelieferten Datensatzes mit Hilfe der Response des betreffenden physischen Token und
- Vergleichen des verschlüsselten Datensatzes mit dem von dem letzten physischen Token empfangenen verschlüsselten Datensatz, wobei die in der Folge enthaltenen physischen Tokens authentisiert werden, wenn eine Übereinstimmung der beiden verschlüsselten Datensätze besteht.

5. Verfahren nach Anspruch 1, wobei die Response des betreffenden Token (101, 102, 103) als privater Schlüssel verwendet wird und die der Response des betreffenden Token zugeordneten Daten einen öffentlichen Schlüssel darstellen, der dem genannten privaten Schlüssel entspricht.

6. Verfahren nach Anspruch 5, wobei die kryptographische Verarbeitung des Datensatzes das digitale Signieren des Datensatzes umfasst und der Schritt des Verwendens des digital signierten Datensatzes, des Datensatzes selbst und des genannten öffentlichen Schlüssels zur Authentisierung der Folge physischer Tokens (101, 102, 103) folgende Schritte umfasst:
- Empfangen eines digital signierten Datensatzes von jedem physischen Token, nachdem das betreffende Token seine Signatur durchgeführt hat, und
- Überprüfen des genannten von jedem Token empfangenen digital signierten Datensatzes mit Hilfe des dem privaten Schlüssel des betreffenden physischen Token entsprechenden öffentlichen Schlüssels.

7. Verfahren nach Anspruch 6, das ferner den Schritt des Vergleichens des von jedem physischen Token (101, 102, 103) empfangenen überprüften Datensatzes mit den jedem Token als Challenge bereitgestellten Daten, wobei die in der Folge enthaltenen physischen Tokens authentisiert werden, wenn eine Übereinstimmung zwischen dem genannten überprüften Datensatz und den genannten als Challenge bereitgestellten Daten besteht.

8. Verfahren nach Anspruch 1, das ferner den Schritt des Empfangens einer Reihenfolge umfasst, in der die Einrichtungen (108, 109, 110) in Reihe zusammen geschaltet sind.

9. Verfahren nach Anspruch 1, das ferner den Schritt des Zuführens einer Reihenfolge zu den Einrichtungen (108, 109, 110) umfasst, in der sie in Reihe zusammen geschaltet werden sollen.

10. Verfahren nach Anspruch 1, wobei der der Folge zugeführte Datensatz eine Zufallszahl umfasst.

11. Einrichtung (104) zum Authentisieren einer Vielzahl physischer Tokens, die Folgendes umfasst:
- Mittel (111) zum Liefern einer Folge zusammen geschalteter Einrichtungen (108, 109, 110), wobei jede Einrichtung ein physisches Token (101, 102, 103) umfasst, mit einer während der Registrierung des betreffenden physischen Token geschaffenen Challenge, wobei die Folge zusammen geschalteter Einrichtungen so angeordnet ist, dass ein der Folge zugeführter Datensatz mit einer Response eines in einer Einrichtung enthaltenen Token kryptographisch verarbeitet und zu einem in einer nachfolgenden Einrichtung enthaltenen Token weitergeleitet wird, das den verarbeiteten Datensatz mit seiner Response weiter kryptographisch verarbeitet bis eine Response eines letzten physischen Token dazu verwendet wurde, den Datensatz weiter kryptographisch zu verarbeiten,
- Mittel (111) zum Empfangen des Datensatzes, der kryptographisch mit den Responses der Tokens in der Folge verarbeitet wurde, und
- Mittel (111) zum Verwenden des kryptographisch verarbeiteten Datensatzes, des Datensatzes selbst und der Response des betreffenden Token zugeordneten Daten zur Authentisierung der Folge physischer Tokens.

12. Computerprogrammprodukt, dass von einem Computer ausführbare Komponenten umfasst, die eine Einrichtung (104) veranlassen, die in Anspruch 1 dargelegten Schritte durchzuführen, wenn die von einem Computer ausführbaren Komponenten in einer in der Einrichtung integrierten Verarbeitungseinheit (111) betrieben werden.

## Revendications

1. Procédé d'authentification d'une pluralité de jetons physiques, comprenant les étapes consistant à :
- fournir une séquence de dispositifs interconnectés (108, 109, 110), chaque dispositif comprenant un jeton physique (101, 102, 103), avec une demande d'accès du jeton physique respectif créée pendant l'introduction dudit jeton physique respectif, où la séquence de dispositifs interconnectés est arrangée de manière à ce qu'un jeu de données fourni à la séquence soit traité cryptographiquement avec une réponse d'un jeton compris dans un dispositif et passé à un jeton compris dans un dispositif ultérieur qui traite ensuite cryptographiquement le jeu de données traité avec sa réponse jusqu'à ce qu'une réponse d'un jeton physique final ait été utilisée pour traiter cryptographiquement le jeu de données :
- recevoir le jeu de données qui a été traité cryptographiquement avec les réponses des jetons dans la séquence ; et
- utiliser le jeu de données traité cryptographiquement, le jeu de données lui-même et les données associées avec la réponse du jeton respectif pour authentifier la séquences des jetons physiques.

2. Procédé selon la revendication 1, dans lequel la donnée associée à la réponse du jeton respectif (101, 102, 103) est la réponse-même du jeton respectif.

3. Procédé selon la revendication 2, dans lequel le traitement cryptographique du jeu de données comprend le cryptage du jeu de données et l'étape consistant à utiliser le jeu de données crypté, le jeu de données lui-même et la réponse du jeton respectif (101, 102, 103) pour authentifier la séquence des jetons physiques, comprenant les étapes consistant à :
- décrypter, à l'aide de la réponse du jeton physique respectif, ledit jeu de données crypté ; et
- comparer le jeu de données décrypté avec un jeu de données correspondant fourni à la séquence, dans lequel les jetons physiques compris dans la séquence sont authentifiés s'il existe une correspondance entre le jeu de données décrypté et le jeu de données fourni à la séquence.

4. Procédé selon la revendication 2, dans lequel le traitement cryptographique du jeu de données comprend le cryptage du jeu de données et l'étape consistant à utiliser le jeu de données crypté, le jeu de données lui-même et la réponse du jeton respectif (101, 102, 103) pour authentifier la séquence des jetons physiques, comprenant les étapes consistant à :
- crypter, à l'aide de la réponse du jeton physique respectif, ledit jeu de données fourni à la séquence ; et
- comparer le jeu de données crypté avec le jeu de données crypté reçu depuis le jeton physique final, dans lequel les jetons physiques compris dans la séquence sont authentifiés s'il existe une correspondance entre les deux jeux de données cryptés.

5. Procédé selon la revendication 1, dans lequel la réponse du jeton respectif (101, 102, 103) est utilisée en tant que clé privée et la donnée associée à la réponse du jeton respectif est une clé publique correspondant à ladite clé privée.

6. Procédé selon la revendication 5, dans lequel le traitement cryptographique du jeu de données comprend la signature numérique du jeu de données et l'étape consistant à utiliser le jeu de données signé numériquement, le jeu de données lui-même et ladite clé publique pour authentifier la séquence des jetons physiques (101, 102, 103), comprenant les étapes consistant à :
- recevoir un jeu de données signé numériquement depuis chaque jeton physique après que le jeton physique respectif a réalisé sa signature ; et
- vérifier à l'aide de la clé publique correspondant à la clé privée du jeton physique respectif que ledit jeu de données signé numériquement est reçu depuis chaque jeton.

7. Procédé selon la revendication 6 comprenant les étapes consistant à comparer le jeu de données vérifié depuis chaque jeton physique (101, 102, 103) avec les données fournies comme demande d'accès à chaque jeton, où les jetons physiques compris dans la séquence sont authentifiés s'il y a une correspondance entre ledit jeu de données vérifié et lesdites données fournies en tant que demande d'accès.

8. Procédé selon la revendication 1, comprenant l'étape consistant à recevoir un ordre dans lequel les dispositifs (108, 109, 110) sont interconnectés en séquence.

9. Procédé selon la revendication 1, comprenant en outre l'étape consistant à fournir les dispositifs (108, 109, 110) avec un ordre dans lequel ils doivent être interconnectés en séquence.

10. Procédé selon la revendication 1, dans lequel le jeu de données fourni à la séquence comprend un nombre aléatoire.

11. Dispositif (104) pour l'authentification d'une pluralité de jetons physiques, comprenant :
- un moyen (111) de fourniture d'une séquence de dispositifs interconnectés (108, 109, 110), chaque dispositif comprenant un jeton physique (101, 102, 103), avec une demande d'accès du jeton physique respectif créée pendant l'introduction dudit jeton physique respectif, où la séquence de dispositifs interconnectés est arrangée de manière à ce qu'un jeu de données fourni à la séquence soit traité cryptographiquement avec une réponse d'un jeton compris dans un dispositif et passé à un jeton compris dans un dispositif ultérieur qui traite cryptographiquement le jeu de données traité avec sa réponse jusqu'à ce qu'une réponse d'un jeton physique final ait été utilisée pour traiter cryptographiquement le jeu de données ;
- moyen (111) de réception du jeu de données qui a été cryptographiquement traité avec les réponses des jetons dans la séquence ; et
- moyen (111) d'utilisation du jeu de données cryptographiquement traité, du jeu de données lui-même et des données associées avec la réponse du jeton respectif pour authentifier la séquence des jetons physiques.

12. Produit de programme informatique comprenant des composants exécutables au niveau informatique pour permettre à un dispositif (104) de réaliser les étapes citées à la revendication 1 lorsque les composants exécutables au niveau informatique sont utilisés sur une unité centrale (111) incluse dans le dispositif.
